# DEMANDE DE BREVET EUROPEEN

(11) **EP 4 047 559 A1**
(43) Date de publication de la demande: **24.08.2022**
(21) Numéro de dépôt: 22158038.4
(22) Date de dépôt: 22.02.2022
(51) Int. Cl.: G06T 19/00

(54) **PROCÉDÉ DE DÉTERMINATION DE CARACTÉRISTIQUES D'AFFICHAGE D'UN ÉLÉMENT DE RÉALITÉ AUGMENTÉE**

(30) Priorité: 22.02.2021 FR 2101690
(71) Demandeur: TotalEnergies SE, 92400 Courbevoie (FR)
(72) Inventeur: GONGUET, Arnaud, 92400 COURBEVOIE (FR); TETARD, Grégory, 92400 COURBEVOIE (FR)
(74) Mandataire: Lavoix

(57) **Abrégé**

La présente invention concerne un procédé de détermination de caractéristiques d'affichage d'un élément de réalité augmentée, le procédé comprenant les étapes de :
a. réception d'une image imageant un marqueur visuel (18) sur une surface support (16),
b. obtention de données de correspondance entre l'élément de réalité augmentée et le marqueur visuel (18),
c. calcul de la distance et d'un angle de vue relatifs au marqueur visuel (18) et à l'utilisateur (12),
d. correction de l'angle de vue calculé en fonction de caractéristiques relatives à un plan support contenant la surface support, pour obtenir un angle de vue corrigé, et
e. détermination de caractéristiques d'affichage de l'élément de réalité augmentée en fonction des données de correspondance, d'une rotation du marqueur visuel (18) par rapport à une référence, de la distance calculée et de l'angle de vue corrigé.

## Description

La présente invention concerne un procédé de détermination de caractéristiques d'affichage d'un élément de réalité augmentée. La présente invention concerne aussi un casque de réalité augmentée associé.

La réalité augmentée est une technologie visant à superposer des informations virtuelles, c'est-à-dire des images de synthèse, dans le champ de vision de l'utilisateur. L'un des enjeux de la réalité augmentée est de projeter les informations virtuelles au bon endroit sur un écran pour que ces informations soient intégrées dans l'espace réel de façon réaliste.

Dans l'industrie, la réalité augmentée est notamment utilisée pour superposer des informations virtuelles à proximité d'une référence lorsque l'utilisateur se trouve à proximité de ladite référence. Par exemple, une technique consiste à scanner un marqueur visuel servant de référence et à afficher les informations virtuelles par rapport à ce marqueur visuel.

Néanmoins, les techniques actuelles basées sur le scannage d'un marqueur visuel ne sont pas satisfaisantes lorsque le marqueur visuel est à grande distance de l'opérateur et/ou que les informations virtuelles à afficher sont éloignées du marqueur visuel. Par exemple, lorsque l'information virtuelle est à quelques mètres du marqueur visuel, une erreur sur l'orientation du marqueur visuel de quelques degrés entraîne une erreur de plusieurs dizaines de centimètres sur la position de l'information virtuelle.

Il existe donc un besoin pour un procédé permettant d'améliorer l'expérience de réalité augmentée d'un opérateur quelle que soit la position de l'opérateur par rapport à un élément servant de référence à l'affichage d'informations virtuelles, et ce même si les informations virtuelles sont à afficher à distance de la référence.

A cet effet, la présente description a pour objet un procédé de détermination de caractéristiques d'affichage d'un élément de réalité augmentée, le procédé étant mis en œuvre par un calculateur et comprenant les étapes de :
a. réception d'une image d'un environnement, l'image comprenant (c'est-à-dire imageant) un marqueur visuel et une surface, dite surface support, servant de support au marqueur visuel, le marqueur visuel) comprenant un indicateur de rotation, l'image ayant été acquise par une caméra d'un casque de réalité augmentée porté par un utilisateur,
b. obtention de données, dites données de correspondance, relatives à la position et l'orientation d'un élément de réalité augmentée à afficher par rapport au marqueur visuel,
c. calcul de la distance entre le marqueur visuel et l'utilisateur par analyse de l'image reçue,
d. calcul d'un angle de vue sous lequel l'utilisateur voit le marqueur visuel par analyse de l'image reçue,
e. détermination en fonction de l'angle de vue, de caractéristiques relatives à un plan contenant la surface support, le plan étant dit plan support,
f. correction de l'angle de vue calculé en fonction des caractéristiques déterminées du plan support pour obtenir un angle de vue corrigé,
g. calcul de la rotation du marqueur visuel par rapport à une référence en fonction de l'indicateur de rotation du marqueur visuel, la rotation du marqueur visuel étant calculée selon une direction correspondant à la direction de regard de l'utilisateur, dite direction transverse, et
h. détermination de caractéristiques d'affichage de l'élément de réalité augmentée en fonction des données de correspondance, de la rotation calculée, de la distance calculée et de l'angle de vue corrigé.

Selon d'autres aspects avantageux, le procédé comprend une ou plusieurs des caractéristiques suivantes, prises isolément ou suivant toutes les combinaisons techniquement possibles :
- le marqueur visuel a des points de référence, l'étape de calcul de l'angle de vue comprenant la détection des points de référence du marqueur visuel sur l'image, et la détermination de la déformation du marqueur visuel sur l'image par rapport à une forme de référence du marqueur visuel en fonction des points de référence détectés, l'angle de vue étant calculé en fonction de la déformation déterminée ;
- l'étape de détermination de caractéristiques du plan support comprend les sous-étapes de :
   a. détermination de caractéristiques relatives à un plan, dit plan marqueur, contenant le marqueur visuel en fonction de l'angle de vue calculé,
   b. détermination, par un modèle de détection, de caractéristiques d'un plan représentant le plan support, dit plan test,
   c. détermination d'un écart entre le plan marqueur et le plan test, et
   d. validation du plan test comme étant le plan support seulement lorsque l'écart déterminé est inférieur ou égal à un seuil prédéterminé, et la répétition des sous-étapes de détermination d'un plan test et de détermination d'un écart jusqu'à l'obtention d'un plan test validé ;
- le modèle de détection est un modèle propre à réaliser un maillage des surfaces de l'environnement dans le champ de vision de la caméra ayant acquis l'image reçue ;
- l'étape de détermination de caractéristiques du plan support comprend la détermination de l'inclinaison du plan support par rapport à une référence, et la correction de l'angle de vue calculé en fonction de l'inclinaison déterminée ;
- le marqueur visuel a des points de référence, l'étape de calcul de la distance comprenant la détection des points de référence du marqueur visuel sur l'image, et la détermination de la distance en fonction des points de référence détectés et de dimensions de référence du marqueur visuel ;
- le procédé comprend l'envoi, à un afficheur du casque de réalité augmentée porté par l'utilisateur, d'une commande d'affichage de l'élément de réalité augmentée associé au marqueur visuel en fonction des caractéristiques d'affichage déterminées ;
- le marqueur visuel est un code bidirectionnel.

La présente description a, également, pour objet un produit programme d'ordinateur comprenant des instructions de programme enregistrées sur un support lisible par ordinateur, pour l'exécution d'un procédé de détermination tel que décrit précédemment lorsque le programme d'ordinateur est exécuté sur un ordinateur.

La présente description concerne aussi un support lisible d'informations sur lequel est mémorisé un produit programme d'ordinateur tel que précédemment décrit.

La présente description porte aussi sur un casque de réalité augmentée comprenant un afficheur, une caméra propre à acquérir des images d'un environnement dans le champ de vision d'un utilisateur du casque et un calculateur, le calculateur étant configuré pour mettre en œuvre un procédé de détermination tel que décrit précédemment.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique d'un exemple d'un environnement dans lequel se trouve un utilisateur équipé d'un casque de réalité augmentée, l'environnement comprend une surface servant de support à un marqueur visuel,
- figure 2, une représentation schématique des éléments du casque de réalité augmentée de la figure 1,
- figure 3, un organigramme d'un exemple d'un procédé de détermination de caractéristiques d'affichage,
- figure 4, une vue schématique de côté illustrant un exemple de rendu dans l'environnement d'un élément de réalité augmentée affiché sur un afficheur du casque de la figure 1, le rendu étant différent en fonction de l'angle de vue calculé sous lequel l'utilisateur voit le marqueur visuel, la figure du haut illustrant ainsi le rendu obtenu pour un angle de vue erroné et la figure du bas illustrant le rendu obtenu pour un angle de vue corrigé,
- figure 5, une vue schématique de dessus illustrant un exemple de rendu dans l'environnement d'un élément de réalité augmentée affiché sur un afficheur du casque de la figure 1, le rendu étant différent en fonction de l'angle de vue calculé sous lequel l'utilisateur voit le marqueur visuel, la figure du haut illustrant ainsi le rendu obtenu pour un angle de vue erroné et la figure du bas illustrant le rendu obtenu pour un angle de vue corrigé, et
- figure 6, une vue schématique du champ de vision de l'utilisateur du casque de la figure 1 lorsqu'un élément de réalité augmenté est affiché sur l'afficheur du casque (après correction de l'angle de vue).

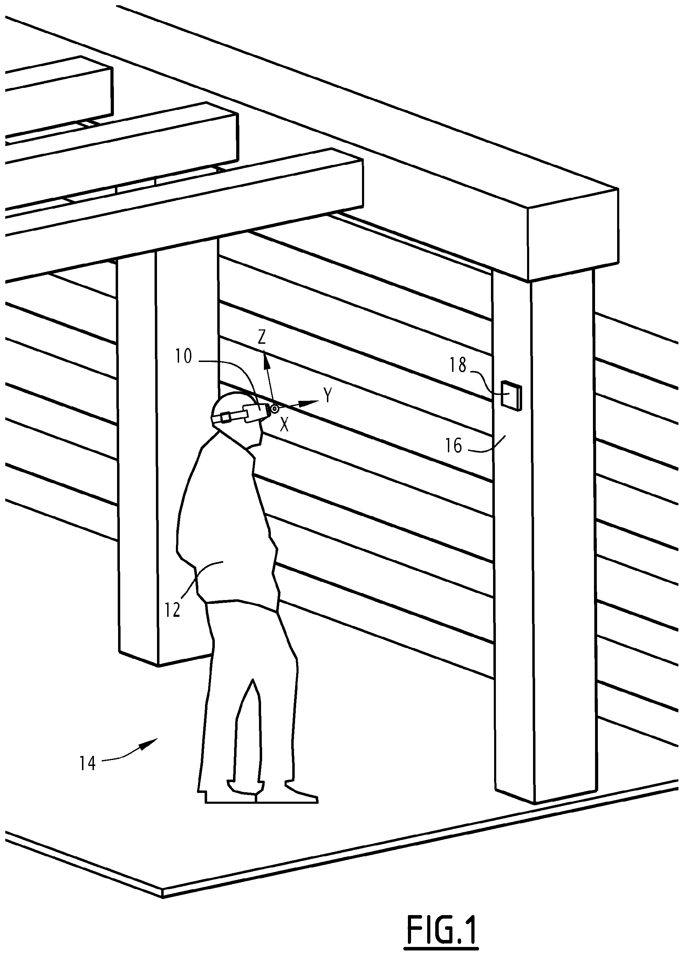

Un casque de réalité augmentée 10 porté par un utilisateur 12 se déplaçant dans un environnement 14 est illustré par la figure 1.

Pour la suite de la description, à titre d'exemple, il est défini une direction longitudinale X, représentée sur les figures par un axe X, qui est perpendiculaire à la direction de regard de l'utilisateur 12 du casque 10 (ou axe de visée du casque 10) et dans un plan horizontal par rapport à la direction de regard. Il est aussi défini une direction transversale Y, représentée sur les figures par un axe Y, perpendiculaire à la direction longitudinale X et correspondant à la direction de regard de l'utilisateur 12 du casque 10. Il est également défini une direction d'élévation Z, représentée sur les figures par un axe Z, perpendiculaire à la direction longitudinale X et à la direction transversale Y (et dans un plan vertical par rapport à la direction de regard).

L'environnement 14 est, par exemple, un environnement intérieur, tel que l'intérieur d'une installation fixe ou mobile. L'environnement 14 comprend au moins une surface, dite surface support 16, servant de support à au moins un marqueur visuel 18.

La surface support 16 est avantageusement plane et s'étend au moins selon la verticale. La surface support 16 est, par exemple, une surface d'un mur ou d'un support d'architecture, tel qu'un pilier ou une poutre.

Le marqueur visuel 18 est un élément, tel qu'un code, encodant éventuellement des données. Les données sont propres à être lues par un lecteur. Les données permettent, par exemple, d'identifier le marqueur visuel et/ou de le localiser.

Le marqueur visuel 18 comprend un indicateur de rotation. L'indicateur de rotation est associé à une position de référence sur le marqueur visuel 18. L'indicateur permet de déterminer la rotation ay du marqueur visuel 18 dans la direction transversale Y par rapport à une position de référence du marqueur visuel 18 (par exemple mémorisée dans une mémoire du calculateur 24). La rotation est, ainsi, autour de l'axe Y, en restant dans le plan (XZ) perpendiculaire à l'axe Y.

Dans un exemple, l'indicateur de rotation fait partie des données encodées dans le marqueur visuel 18. Dans un autre exemple, l'indicateur de rotation est un élément visuel représenté sur le marqueur visuel 18.

Le marqueur visuel 18 est disposé sur la surface support 16 et épouse la forme (plane) de la surface support 16. Le marqueur visuel 18 est, par exemple, fixé sur la surface support 16 via un moyen de fixation, tel qu'un adhésif.

Le marqueur visuel 18 est, de préférence, un code bidirectionnel, tel qu'un code QR (de l'anglais « *quick response code »* traduit en français par « code à réponse rapide »), un code EAN 13, un code datamatrix ou encore un code Bleam.

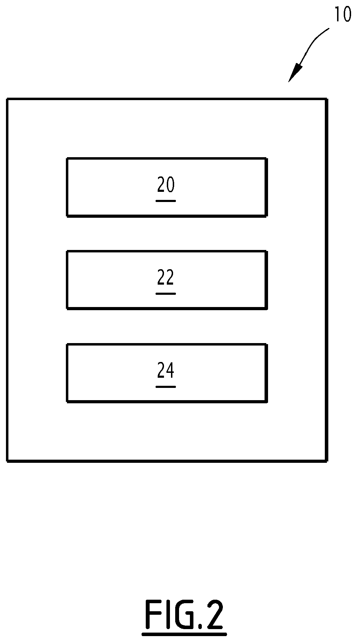

Comme illustré par la figure 2, le casque de réalité augmentée 10 comprend une caméra 20, un afficheur 22 et un calculateur 24, embarqués dans le casque 10.

La caméra 20 est disposée sur le casque 10 de sorte à acquérir des images du champ de vision de l'utilisateur 12. Le champ de vision est défini comme la portion de l'espace vue par un œil regardant droit devant lui et immobile.

L'afficheur 22 est destiné à être placé dans le champ de vision de l'utilisateur 12 du casque 10.

L'afficheur 22 est propre à afficher un ou plusieurs éléments de réalité augmentée E en fonction d'une commande reçue par le calculateur 24. Les éléments de réalité augmentée E affichés sur l'afficheur 22 viennent, ainsi, se superposer à l'environnement 14 dans le champ de vision de l'utilisateur du casque 10.

Le calculateur 24 comprend un processeur comprenant une unité de traitement de données, des mémoires et un lecteur de support d'informations.

Dans un exemple de mise en œuvre, le calculateur 24 est en interaction avec un produit programme d'ordinateur. Le produit programme d'ordinateur comporte un support d'informations. Le support d'information est un support lisible par le calculateur 24, usuellement par l'unité de traitement de données. Le support lisible d'informations est un médium adapté à mémoriser des instructions électroniques et capable d'être couplé à un bus d'un système informatique. A titre d'exemple le support d'informations est une mémoire, une carte magnétique ou optique, ou une clé USB.

Sur le support d'informations est mémorisé le programme d'ordinateur comprenant des instructions de programme. Le programme d'ordinateur est chargeable sur l'unité de traitement de données et est adapté pour entraîner la mise en œuvre d'un procédé de détermination de caractéristiques d'affichage qui sera décrit plus en détails dans la suite de la description.

Dans une variante de mise en œuvre, le calculateur 24 est dissocié du casque 10.

Avantageusement, il est mémorisé dans une mémoire du calculateur 24, des données relatives à la position et à l'orientation d'au moins un élément de réalité augmentée à afficher E par rapport au marqueur visuel 18. En d'autres termes, pour une position (x, y, z) et une orientation (ax, ay, az) du marqueur visuel 18, il est associé une position (xobj, yobj, zobj) et une orientation (axobj, ayobj, azobj) de l'élément de réalité augmentée E. Plus généralement, les données de position et d'orientation sont, par exemple, un modèle tridimensionnel dans lequel l'élément de réalité augmentée E est parfaitement défini par rapport au marqueur visuel 18 selon six cordonnées, à savoir trois coordonnées de position (xobj, yobj, zobj) et trois coordonnées d'orientation (axobj, ayobj, azobj). Le marqueur visuel 18 permet, ainsi, de faire le lien entre la réalité et le modèle de données car c'est le seul élément qui est présent à la fois dans la réalité et dans le modèle de données.

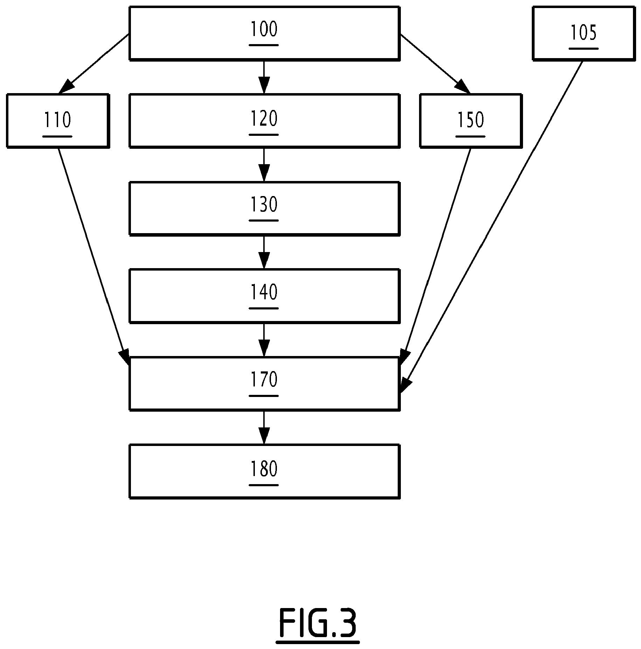

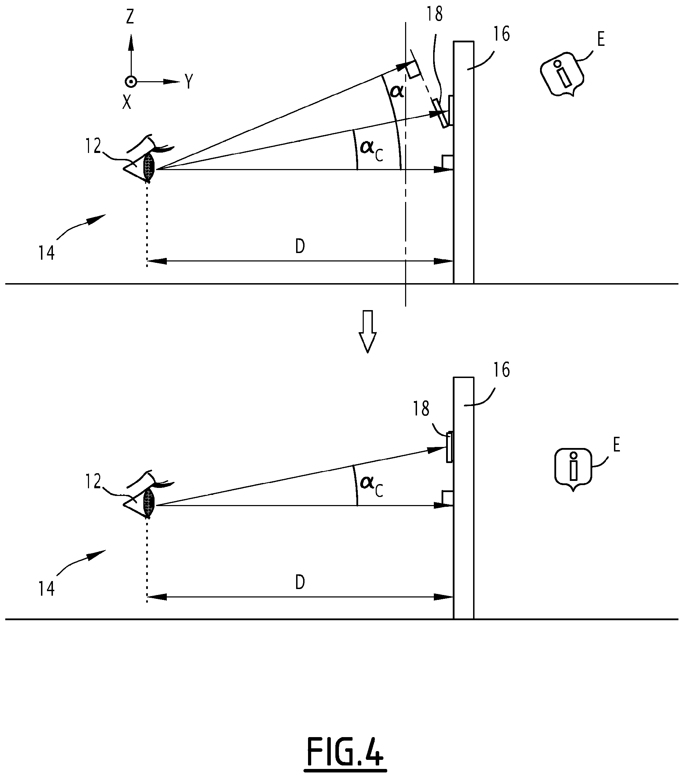

Un procédé de détermination de caractéristiques d'affichage va maintenant être décrit en référence à l'organigramme de la figure 3 et aux exemples des figures 4 à 6. Les étapes du procédé qui suit sont par exemple mises en œuvre par le calculateur 24 en interaction avec le produit programme d'ordinateur, c'est-à-dire mises en œuvre par ordinateur.

Le procédé de détermination comprend une étape 100 de réception, par le calculateur 24, d'une image IM de l'environnement 14 sur laquelle est imagée un marqueur visuel 18 tel que décrit précédemment et la surface support 16 du marqueur visuel 18. Eventuellement, la lecture de données encodées dans le marqueur visuel 18 permet d'obtenir la localisation du marqueur visuel 18 et/ou de l'identifier.

L'image IM a été acquise par la caméra 20 du casque 10 porté par l'utilisateur 12. L'image IM est donc une image du champ de vision de l'utilisateur 12.

Le procédé de détermination comprend une étape 105 d'obtention de données, dites données de correspondance, relatives à la position et l'orientation d'un élément de réalité augmentée E à afficher par rapport au marqueur visuel 18. Cela permet d'obtenir la position relative (xobj, yobj, zobj) et l'orientation relative (axobj, ayobj, azobj) d'un élément de réalité augmentée E par rapport à la position (x, y, z) et l'orientation (ax, ay, az) du marqueur visuel 18.

Les données sont, par exemple, obtenues via un modèle tridimensionnel mémorisé dans une mémoire du calculateur 24, comme cela a été décrit précédemment.

Le procédé de détermination comprend une étape 110 de calcul de la distance D entre le marqueur visuel 18 et l'utilisateur 12 par analyse de l'image IM reçue.

Dans un exemple de mise en œuvre, l'étape de calcul 110 comprend la détection de points de référence sur le marqueur visuel 18 imagé sur l'image IM. Les points de référence dépendent du marqueur visuel 18 considéré. Par exemple, dans le cas d'un marqueur visuel 18 de forme carrée, tel qu'un code QR, les points de référence sont les sommets du carré. Dans le cas d'un marqueur visuel 18 de forme circulaire, les points de référence sont des points définissant le diamètre du cercle.

L'étape de calcul 110 comprend ensuite la détermination de la distance D en fonction des points de référence détectés et de dimensions de référence du marqueur visuel 18. Les dimensions de référence du marqueur visuel 18 sont, par exemple, contenues dans une mémoire du calculateur 24. Ainsi, dans cet exemple, la distance D est obtenue sur le principe d'une homothétie.

Le procédé de détermination comprend une étape 120 de calcul d'un angle de vue α sous lequel l'utilisateur 12 voit le marqueur visuel 18 par analyse de l'image IM reçue.

Dans un exemple de mise en œuvre, l'étape de calcul 120 comprend la détection de points de référence du marqueur visuel 18 sur l'image IM. Les points de référence sont, par exemple, les points décrits lors de l'étape de calcul 110.

L'étape de calcul 120 comprend la détermination de la déformation du marqueur visuel 18 sur l'image IM par rapport à une forme de référence du marqueur visuel 18 en fonction des points de référence détectés. La déformation déterminée définit une rotation ax du marqueur visuel 18 par rapport à la direction longitudinale X et une rotation az du marqueur visuel 18 par rapport à la direction d'élévation Z. En d'autres termes, la déformation définie une rotation du plan d'appartenance du marqueur 18 autour des axes X et Z, étant donné que les axes X et Z définissent le plan perpendiculaire à l'axe Y (qui définit lui-même l'angle de visée de l'utilisateur sur le marqueur visuel 18).

L'angle de vue α est calculé en fonction de la déformation déterminée. L'angle de vue α est obtenu sur le principe d'une homothétie.

Le procédé de détermination comprend une étape 130 de détermination de caractéristiques relatives à un plan contenant la surface support 16, le plan étant dit plan support Ps.

Les caractéristiques déterminées sont notamment l'inclinaison du plan support P_{S} par rapport au plan (XZ) défini par la direction longitudinale X et la direction d'élévation Z. En d'autres termes, les caractéristiques déterminées permettent de définir la rotation Ax du plan support P_{S} par rapport à la direction longitudinale X et la rotation Az du plan support P_{S} par rapport à la direction d'élévation Z.

Dans un exemple de mise en œuvre, l'étape de détermination 130 comprend différentes sous-étapes énoncées dans ce qui suit.

Dans cet exemple, l'étape de calcul 130 comprend une sous-étape de détermination de caractéristiques relatives à un plan, dit plan marqueur P_{M}, contenant le marqueur visuel 18 en fonction de l'angle de vue α calculé.

Les caractéristiques déterminées sont notamment l'inclinaison du plan marqueur P_{M} par rapport au plan (XZ) défini par la direction longitudinale X et la direction d'élévation Z. En d'autres termes, les caractéristiques déterminées sont la rotation ax du plan marqueur P_{M} par rapport à la direction longitudinale X et la rotation az du plan marqueur P_{M} par rapport à la direction d'élévation Z.

L'étape de calcul 130 comprend une sous-étape de détermination, par un modèle de détection, de caractéristiques d'un plan représentant le plan support P_{S}, dit plan test P_{T}.

Le modèle de détection est un modèle propre à réaliser une cartographie ou maillage spatial des surfaces de l'environnement 14 dans le champ de vision de la caméra 20 ayant acquis l'image reçue IM.

Le modèle de détection utilise par exemple une technologie permettant de repérer une surface au moyen de triangles dont la position des sommets dans l'espace est connue. Un calcul permet notamment de définir le plan de la surface (et donc ses caractéristiques) par moyennage des positions des sommets des triangles. Les calculs sont, par exemple, effectués par un algorithme, tel que l'algorithme VSLAM (en anglais « Visual Simultaneous Localization and Mapping » traduit en français par « Localisation et cartographie visuelles simultanées »).

L'étape de calcul 130 comprend une sous-étape de détermination d'un écart Δ (éventuel) entre le plan marqueur P_{M} et le plan test P_{T}.

L'étape de calcul 130 comprend une sous-étape de validation du plan test P_{T} comme étant le plan support P_{S} seulement lorsque l'écart Δ déterminé est inférieur ou égal à un seuil prédéterminé.

Dans le cas contraire, cela signifie que le plan test P_{T} est probablement erroné et que la surface support 16 identifiée n'est pas celle du marqueur visuel 18. Dans ce cas, les sous-étapes de détermination d'un plan test P_{T} et de détermination d'un écart Δ sont répétées jusqu'à l'obtention d'un plan test P_{T} validé.

Une telle sous-étape de validation présente un intérêt particulier en fonction de la position du marqueur 18 dans l'environnement 14. Par exemple, lorsque le marqueur 18 est disposé sur un poteau, il est fréquent d'imager en même temps deux côtés du poteau, à savoir celui où est apposé le marqueur 18 et l'un des côtés adjacents. La sous-étape de validation permet alors de s'assurer que l'on détecte le bon côté comme étant le plan support Ps.

Le procédé de détermination comprend une étape 140 de correction de l'angle de vue α calculé en fonction des caractéristiques déterminées du plan support P_{S} pour obtenir un angle de vue corrigé α_{c}.

Dans un exemple de mise en œuvre, la correction de l'angle de vue α est déterminée en fonction de l'inclinaison du plan support P_{S} déterminée. Notamment, la rotation ax du marqueur visuel 18 par rapport à la direction longitudinale X est corrigée en étant remplacée par la rotation Ax du plan support P_{S} déterminé. De même, la rotation az du marqueur visuel 18 par rapport à la direction d'élévation Z est corrigée en étant remplacée par la rotation Az du plan support P_{S} déterminé. L'angle de vue corrigé α_{c} est alors déduit des nouvelles coordonnées : ax=Ax et az=Az.

Le procédé de détermination comprend une étape 150 de calcul de la rotation ay du marqueur visuel 18 par rapport à la direction transversale Y par analyse de l'indicateur de rotation du marqueur visuel 18. Par exemple, la position de l'indicateur de rotation du marqueur visuel 18 sur l'image acquise est, par exemple, comparée avec une position de référence de l'indicateur de rotation, ce qui permet d'en déduire la rotation ay. Cela revient à corriger l'inclinaison de la tête de l'opérateur.

Le procédé de détermination comprend une étape 170 de détermination de caractéristiques d'affichage de l'élément de réalité augmentée E en fonction des données de correspondance, de la rotation ay calculée, de la distance D calculée et de l'angle de vue corrigé α_{c}.

Les caractéristiques d'affichage sont les caractéristiques permettant d'afficher l'élément de réalité augmentée E sur l'afficheur 22 du casque 10 de sorte que l'utilisateur 12 ait l'illusion que les éléments E sont dans l'environnement 14 de l'utilisateur 12. Notamment, les données de correspondance permettent de déterminer la position (xobj, yobj, zobj) et l'orientation (axobj, ayobj, azobj) de l'élément E par rapport au marqueur visuel 18. La distance D permet de déterminer la réduction ou l'augmentation d'échelle à appliquer à l'élément E pour donner l'illusion à l'utilisateur 12 du casque 10 que l'élément E est positionné en (xobj, yobj, zobj) et orienté (axobj, ayobj, azobj) par rapport au marqueur visuel 18 dans l'environnement 14. L'angle de vue corrigé α_{c} permet de déterminer la déformation à appliquer à l'élément E pour donner l'illusion à l'utilisateur 12 du casque 10 que l'élément E est positionné en (xobj, yobj, zobj) et orienté (axobj, ayobj, azobj) par rapport au marqueur visuel 18 dans l'environnement 14.

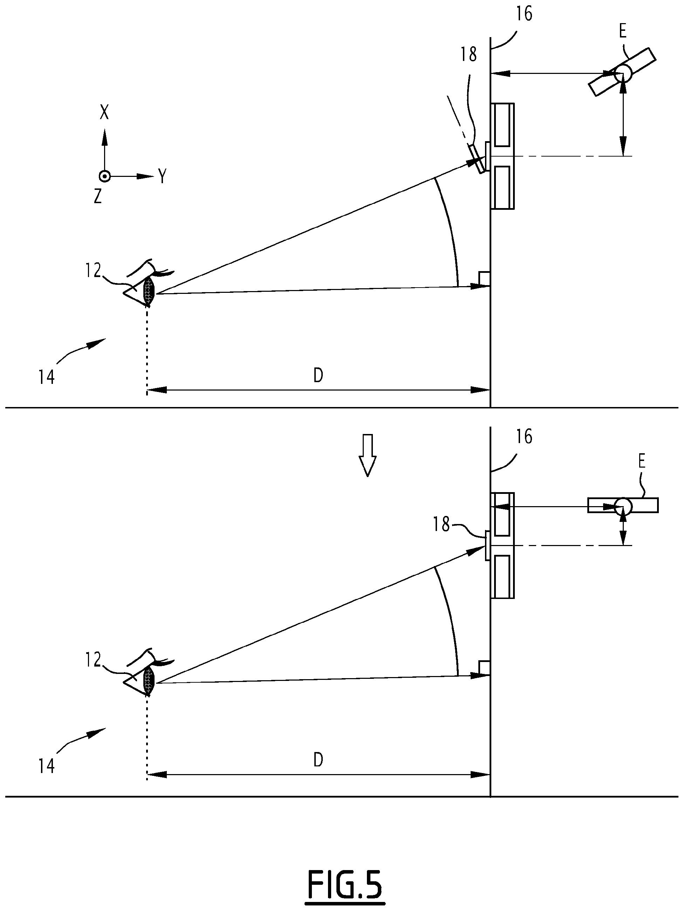

Comme visible sur les figures 4 et 5, la position et l'orientation de l'élément de réalité augmentée E dépend de la position et de l'orientation du marqueur visuel 18. Ainsi, un angle de vue α erroné pour le marqueur visuel 18 induit un positionnement erroné de l'élément de réalité augmentée E comme cela est représenté sur la partie haute des figures 4 et 5. Lorsque l'angle de vue α est corrigé, le positionnement de l'élément de réalité augmentée E est aussi corrigé de sorte que l'élément E s'intègre dans l'environnement 14, comme cela est représenté sur la partie basse des figures 4 et 5.

Le procédé de détermination comprend une étape 180 d'envoi d'une commande d'affichage, sur l'afficheur 22 du casque 10, de l'élément de réalité augmentée E associé au marqueur visuel 18 en fonction des caractéristiques d'affichage déterminées. L'élément de réalité augmentée E est alors affiché sur l'afficheur 22 du casque 10.

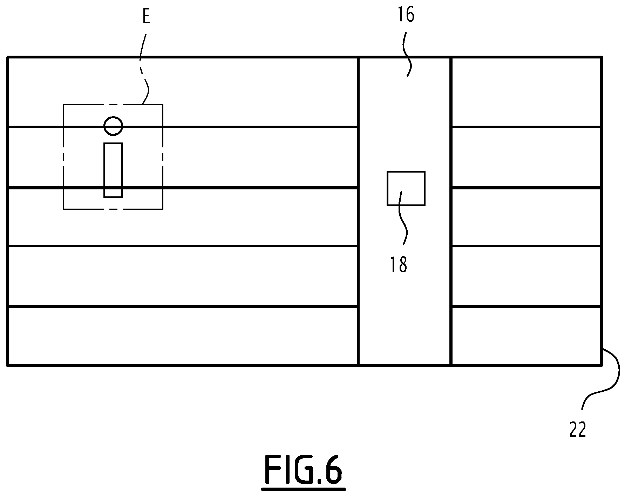

La figure 6 illustre un exemple de l'image de réalité augmentée vue par l'utilisateur 12 du casque 10.

Ainsi, le présent procédé permet de déterminer des caractéristiques d'affichage d'un élément de réalité augmentée E à afficher en fonction de données obtenues pour un marqueur visuel 18 présent dans l'environnement 14.

En particulier, l'identification de la position du marqueur visuel 18 permet de déterminer le ou les éléments de réalité augmentée E à afficher en fonction de la position de l'utilisateur 12 du casque 10 de réalité augmentée. Cela est obtenu par les données de correspondance obtenues et par une détermination de la distance D entre l'utilisateur 12 et le marqueur visuel 18 (ex : mesure du rapetissement relatif du marqueur visuel 18). Ces données seules permettraient d'afficher un point là où se trouve le marqueur visuel 18, mais ne permettraient pas d'afficher de manière satisfaisante des éléments de réalité augmentée E non ponctuels et potentiellement éloignés du marqueur visuel 18. En effet, une erreur de quelques centimètres sur la position (x, y, z) du marqueur visuel 18 serait seulement translatée à la position de l'élément E à afficher. Néanmoins, une erreur d'orientation sur l'orientation (ax, ay, az) du marqueur visuel 18 de quelques degrés deviendrait une erreur de plusieurs dizaines de centimètres en position par rapport à la position de l'utilisateur 12, si l'élément E à afficher est à quelques mètres du marqueur visuel 18 (sans compter que l'élément E à afficher aura aussi l'air d'être de travers).

C'est pourquoi le présent procédé vise à identifier précisément l'orientation (ax, ay, az) du marqueur visuel 18 par rapport à un repère de référence (X, Y, Z) défini par rapport à l'utilisateur 12 du casque 10. Les valeurs de ax et az sont obtenues lors du calcul de l'angle de vue α (ex : détermination de la déformation du marqueur visuel 18). Néanmoins, le marqueur visuel 18 étant petit, il est difficile d'avoir une détermination précise de ax et az. C'est pourquoi le présent procédé utilise la détermination obtenue pour avoir une approximation du plan du marqueur visuel 18 et détermine les caractéristiques (Ax, Az) du plan support P_{S} de la surface supportant le marqueur visuel 18. Les caractéristiques obtenues pour le plan support P_{S} étant plus précises (car la surface est plus grande que le marqueur visuel 18), les données ax et az obtenues précédemment pour le marqueur visuel 18 sont remplacées par l'orientation (Ax, Az) du plan support P_{S}.

Ainsi, le présent procédé permet d'améliorer l'expérience de réalité augmentée de l'utilisateur 12 du casque 10 quelle que soit la position de l'utilisateur 12 par rapport à un marqueur visuel 18 servant de référence à l'affichage d'informations virtuelles, et ce même si les informations virtuelles sont à afficher à distance de la référence.

L'homme du métier comprendra que l'ordre des étapes du procédé est donné à titre d'exemple et que les étapes peuvent être mises en œuvre dans un ordre différent. L'homme du métier comprendra également que les modes de réalisation et variantes précédemment décrits peuvent être combinés pour former de nouveaux modes de réalisation pourvu qu'ils soient compatibles techniquement.

## Revendications

1. Procédé de détermination de caractéristiques d'affichage d'un élément de réalité augmentée (E), le procédé étant mis en œuvre par un calculateur (24) et comprenant les étapes de :
a. réception d'une image (IM) d'un environnement (14), l'image (IM) imageant un marqueur visuel (18) et une surface, dite surface support (16), servant de support au marqueur visuel (18), le marqueur visuel (18) comprenant un indicateur de rotation, l'image ayant été acquise par une caméra (20) d'un casque (10) de réalité augmentée porté par un utilisateur (12),
b. obtention de données, dites données de correspondance, relatives à la position et l'orientation d'un élément de réalité augmentée (E) à afficher par rapport au marqueur visuel (18),
c. calcul de la distance (D) entre le marqueur visuel (18) et l'utilisateur (12) par analyse de l'image (IM) reçue,
d. calcul d'un angle de vue (a) sous lequel l'utilisateur (12) voit le marqueur visuel (18) par analyse de l'image (IM) reçue,
e. détermination, en fonction de l'angle de vue (a), de caractéristiques relatives à un plan contenant la surface support (16), le plan étant dit plan support (P_{S}),
f. correction de l'angle de vue (a) calculé en fonction des caractéristiques déterminées du plan support (P_{S}) pour obtenir un angle de vue corrigé (α_{c}),
g. calcul de la rotation (ay) du marqueur visuel (18) par rapport à une référence en fonction de l'indicateur de rotation du marqueur visuel (18), la rotation (ay) du marqueur visuel étant calculée selon une direction correspondant à la direction de regard de l'utilisateur, dite direction transverse (Y), et
h. détermination de caractéristiques d'affichage de l'élément de réalité augmentée (E) en fonction des données de correspondance, de la rotation (ay) calculée, de la distance (D) calculée et de l'angle de vue corrigé (α_{c}).

2. Procédé selon la revendication 1, dans lequel le marqueur visuel (18) a des points de référence, l'étape de calcul de l'angle de vue (a) comprenant la détection des points de référence du marqueur visuel (18) sur l'image (IM), et la détermination de la déformation du marqueur visuel (18) sur l'image (IM) par rapport à une forme de référence du marqueur visuel (18) en fonction des points de référence détectés, l'angle de vue (a) étant calculé en fonction de la déformation déterminée.

3. Procédé selon la revendication 1 ou 2, dans lequel l'étape de détermination de caractéristiques du plan support (P_{S}) comprend les sous-étapes de :
a. détermination de caractéristiques relatives à un plan, dit plan marqueur (P_{M}), contenant le marqueur visuel (18) en fonction de l'angle de vue (a) calculé,
b. détermination, par un modèle de détection, de caractéristiques d'un plan représentant le plan support, dit plan test (P_{T}),
c. détermination d'un écart (Δ) entre le plan marqueur (P_{M}) et le plan test (P_{T}), et
d. validation du plan test (P_{T}) comme étant le plan support (P_{S}) seulement lorsque l'écart (Δ) déterminé est inférieur ou égal à un seuil prédéterminé, et la répétition des sous-étapes de détermination d'un plan test (P_{T}) et de détermination d'un écart (Δ) jusqu'à l'obtention d'un plan test validé.

4. Procédé selon la revendication 3, dans lequel le modèle de détection est un modèle propre à réaliser un maillage des surfaces de l'environnement (14) dans le champ de vision de la caméra (20) ayant acquis l'image reçue (IM).

5. Procédé selon la revendication 3 ou 4, dans lequel l'étape de détermination de caractéristiques du plan support (P_{S}) comprend la détermination de l'inclinaison du plan support (P_{S}) par rapport à une référence, et la correction de l'angle de vue (a) calculé en fonction de l'inclinaison déterminée.

6. Procédé selon l'une quelconque des revendications 1 à 5, dans lequel le marqueur visuel (18) a des points de référence, l'étape de calcul de la distance (D) comprenant la détection des points de référence du marqueur visuel (18) sur l'image (IM), et la détermination de la distance (D) en fonction des points de référence détectés et de dimensions de référence du marqueur visuel (18).

7. Procédé selon l'une quelconque des revendications 1 à 6, dans lequel le procédé comprend l'envoi, à un afficheur (22) du casque (10) de réalité augmentée porté par l'utilisateur (12), d'une commande d'affichage de l'élément de réalité augmentée (E) associé au marqueur visuel (18) en fonction des caractéristiques d'affichage déterminées.

8. Procédé selon l'une quelconque des revendications 1 à 7, dans lequel le marqueur visuel (18) est un code bidirectionnel.

9. Produit programme d'ordinateur comprenant des instructions de programme enregistrées sur un support lisible par ordinateur, pour l'exécution d'un procédé de détermination selon l'une quelconque des revendications 1 à 8 lorsque le programme d'ordinateur est exécuté sur un ordinateur.

10. Casque (10) de réalité augmentée comprenant un afficheur (22), une caméra (20) propre à acquérir des images d'un environnement (14) dans le champ de vision d'un utilisateur (12) du casque (10) et un calculateur (24), le calculateur (24) étant configuré pour mettre en oeuvre un procédé selon l'une quelconque des revendications 1 à 8.
